# EUROPÄISCHE PATENTSCHRIFT

(11) **EP 3 650 743 B1**
(45) Veröffentlichungstag und Bekanntmachung des Hinweises auf die Patenterteilung: **07.05.2025**
(21) Anmeldenummer: 19201618.6
(22) Anmeldetag: 07.10.2019
(51) Int. Cl.: F21S 8/06, F21V 21/112, F16G 11/10, F16M 13/02

(54) **BEFESTIGUNGSVORRICHTUNG**
ATTACHMENT DEVICE
DISPOSITIF DE FIXATION

(30) Priorität: 07.11.2018 DE 202018106320 U
(43) Veröffentlichungstag der Anmeldung: 13.05.2020
(73) Patentinhaber: Zumtobel Lighting GmbH, 6850 Dornbirn (AT)
(72) Erfinder: Krajnjona, Michael, 6922 Wolfurt (AT)
(74) Vertreter: Kiwit, Benedikt

(56) Entgegenhaltungen:
- WO-A1-2017/044449
- AT-U1- 14 937
- CN-U- 207 921 991
- CN-Y- 2 529 002
- DE-A1- 3 729 276
- DE-U1- 202012 003 859
- DE-U1- 202014 104 901
- JP-A- 2009 127 795
- JP-A- H08 115 607

## Beschreibung

### 1. Gebiet der Erfindung

Die vorliegende Erfindung betrifft eine Befestigungsvorrichtung zur Befestigung einer Leuchte wie beispielsweise einer Pendelleuchte an eine Aufhängungsstruktur, ein Leuchtengehäuse aufweisend eine solche Befestigungsvorrichtung, eine Leuchte aufweisend ein solches Leuchtengehäuse und ein Leuchtensystem aufweisend eine solche Leuchte.

### 2. Hintergrund

Befestigungsvorrichtungen der eingangs genannten Art sind grundsätzlich aus dem Stand der Technik bekannt. Insbesondere sind Leuchten bekannt, die eine mit dem Leuchtenkörper oder Leuchtengehäuse ausgebildete Befestigungsvorrichtung aufweisen, welche die Leuchte an eine Aufhängungsstruktur wie beispielsweise einer Seilabhängung befestigen. Die Aufhängungsstruktur weist üblicherweise ein Abhängeelement, insbesondere ein Seil, und einen an dem distalen Ende des Abhängeelements verbundenen Aufhängungskörper, beispielsweise in Form eines Nippels oder einer Kugel, auf. Die Aufhängungsstruktur kann fix an der Befestigungsvorrichtung montiert werden, beispielsweise mit einer Schraube. Alternativ kann die Aufhängungsstruktur auch über eine entsprechende Aufnahme an der Befestigungsvorrichtung montiert sein, indem die Aufhängungsstruktur in die Befestigungsvorrichtung eingeführt und zu einer Tragposition bewegt wird, in der die Aufhängungsstruktur die Befestigungsvorrichtung hängend trägt bzw. in der der Aufhängungskörper in Richtung der Tragkraft blockiert ist. Dies erfolgt beispielsweise in einfachster Form durch einen horizontalen Schlitz, in welchen die Aufhängungsstruktur bzw. die Seilabhängung seitlich eingeschoben wird, sodass die Aufhängungsstruktur insbesondere über den Aufhängungskörper entsprechend eingehängt ist.

Eine andere aus dem Stand der Technik bekannte Ausführungsform weist eine Art Schlüssellochöffnung auf, welche eine Öffnung mit größerem Durchmesser sowie eine mit dieser direkt oder über einen Längsschlitz verbundene weitere Öffnung mit kleinerem Durchmesser aufweist. Die größere Öffnung hat einen Durchmesser, der größer ist als der Aufhängungskörper ist. Die weitere bzw. kleinere Öffnung hingegen hat einen Durchmesser, der entsprechend kleiner ist als der Aufhängungskörper. Der Längsschlitz ist, sofern vorhanden, bevorzugt schmaler als die beiden Öffnungen ausgebildet, aber so breit, dass beispielsweise das Seil der Seilabhängung durch diesen hindurch passt. Die Aufhängungsstruktur wird sodann mit dem Aufhängungskörper voran in die größere Öffnung eingeführt und zu der kleineren Öffnung hin bewegt, wo die Aufhängungsstruktur über den Aufhängungskörper anliegt und somit gehalten ist.

Um ein Herausrutschen bzw. eine Bewegung der Aufhängungsstruktur insbesondere zu der großen Öffnung hin zu vermeiden, ist es aus dem Stand der Technik bekannt, zwischen der großen und der kleinen Öffnung einen separat bereitgestellten Sperrkörper, beispielsweise in Form eines Befestigungsmittels, vorzusehen. So kann zwischen den beiden Öffnungen eine Schraube eingeschraubt sein, welche die Verbindung zwischen diesen Öffnungen blockiert, sodass die Aufhängungsstruktur sicher im Bereich der kleinen Öffnung gehalten ist und somit aus dieser nicht herausrutschen kann.

DE 20 2014 104901 U1 offenbart ein Leuchtengehäuse gemäß dem Oberbegriff von Anspruch 1.

Die aus dem Stand der Technik bekannte Sicherung der Aufhängungsstruktur bzw. des Aufhängungskörpers ist zwar sicher, erfordert jedoch einen hohen Montageaufwand, da neben dem Einfädeln der Aufhängungsstruktur ein weiteres Bauteil zum Blockieren der eingesetzten Aufhängungsstruktur notwendig ist.

Es ist somit eine Aufgabe der vorliegenden Erfindung, eine Befestigungsvorrichtung der eingangs genannten Art bereitzustellen, welche eine schnellere und langfristig sichere Befestigung ermöglicht.

Diese und andere Aufgaben, die beim Lesen der folgenden Beschreibung noch genannt werden oder vom Fachmann erkannt werden können, werden mit dem Gegenstand der unabhängigen Ansprüche gelöst. Vorteilhafte Weiterbildungen sind Gegenstand der hierauf rückbezogenen Unteransprüche.

### 3. Ausführliche Beschreibung der Erfindung

Gemäß einem ersten Aspekt betrifft die Erfindung ein Leuchtengehäuse, aufweisend eine Befestigungsvorrichtung zur Befestigung einer Leuchte wie beispielsweise eine Pendelleuchte (oder eines sonstigen Elements) an eine Aufhängungsstruktur, mit wenigstens einer Befestigungsstruktur, wobei die wenigstens eine Befestigungsstruktur aufweist: eine Öffnung und einen mit der Öffnung verbundenen Schlitz, welche derart ausgebildet sind, dass eine über die Öffnung in die Befestigungsvorrichtung eingeführte Aufhängungsstruktur über den Schlitz in eine Tragposition bewegbar ist, in der die Aufhängungsstruktur die Befestigungsvorrichtung hängend trägt. Der Schlitz weist einen zackenförmig verlaufenden Abschnitt zum Verhindern einer Bewegung der Aufhängungsstruktur aus der Tragposition auf, und der Schlitz ist derart ausgebildet, dass die Aufhängungsstruktur durch die Gewichtskraft der Befestigungsvorrichtung in die Tragposition (automatisch) getrieben werden kann.

Erfindungsgemäß wird "Verhindern einer Bewegung der Aufhängungsstruktur aus der Tragposition" so verstanden, dass eine manuelle Bewegung der Aufhängungsstruktur aus der Tragposition (beispielsweise durch einen Monteur) noch möglich ist, jedoch eine (ungewollte) Bewegung der Aufhängungsstruktur aus der Tragposition, insbesondere aufgrund von auf die Befestigungsvorrichtung wirkenden äußeren Kräften oder Stößen, verhindert wird.

Mit anderen Worten wird nur durch die Ausbildung des Schlitzes bewirkt, dass die Aufhängungsstruktur in der Tragposition gesichert ist.

Separat bereitgestellte Befestigungsmittel zur Sicherung der Aufhängungsstruktur können somit entfallen, wodurch die Anzahl der notwendigen Bauteile und der Montageaufwand reduziert wird. Eine besonders gute Sicherung der Aufhängungsstruktur in der Tragposition wird insbesondere dann bereitgestellt, wenn der Schlitz gemäß den beiden Alternativen ausgebildet ist. Zur einfachen Sicherung kann jedoch auch vorgesehen sein, dass der Schlitz nur den zackenförmig bzw. bewusst nicht geradlinig verlaufenden Abschnitt aufweist oder der Schlitz nur derart ausgebildet ist, dass die Aufhängungsstruktur durch die Gewichtskraft der Befestigungsvorrichtung in die Tragposition getrieben werden kann.

Der zackenförmig verlaufende Abschnitt weist einen den zackenförmig verlaufenden Abschnitt bildenden ersten und zweiten Teilabschnitt auf, wobei der erste und der zweite Teilabschnitt derart verlaufen, dass, wenn die Aufhängungsstruktur die Befestigungsvorrichtung in der Tragposition trägt, eine Bewegung der Aufhängungsstruktur aus dem ersten Teilabschnitt in den zweiten Teilabschnitt und somit aus der Tragposition verhindert wird. Mit anderen Worten bewirkt der Winkel zwischen dem ersten Teilabschnitt und dem zweiten Teilabschnitt, dass die Aufhängungsstruktur nicht unbeabsichtigt aus der Tragposition bewegt werden kann. Insbesondere bei einem spitzen Winkel kann eine unbeabsichtigte Bewegung der Aufhängungsstruktur aus der Tragposition besonders effektiv verhindert werden. Der Winkel liegt erfindungsgemäß in einem Bereich von 20° bis 70°, bevorzugt in einem Bereich von 30° bis 50°, beträgt beispielsweise im Wesentlichen 37°. Vorzugsweise ist der erste Teilabschnitt länger ausgebildet als der zweite Teilabschnitt. Folglich kann der erste Teilabschnitt vorteilhaft bewirken, dass auf die Befestigungsstruktur wirkenden äußeren Kräfte oder Stöße und somit eine schleudernde Aufhängungsstruktur aufgefangen werden.

Der Schlitz weist wenigstens einen weiteren zackenförmig verlaufenden Abschnitt auf, wobei der weitere zackenförmig verlaufende Abschnitt (direkt) mit der Öffnung und (direkt) mit dem zackenförmig verlaufenden Abschnitt verbunden ist, sodass die über die Öffnung in die Befestigungsvorrichtung eingeführte Aufhängungsstruktur über den weiteren zackenförmigen Abschnitt und den zackenförmig verlaufenden Abschnitt in die Tragposition bewegbar ist, und die zackenförmigen Abschnitte eine Bewegung der Aufhängungsstruktur aus der Tragposition verhindern können. Auf diese Weise kann die Aufhängungsstruktur in der Tragposition noch sicherer gehalten werden, da der weitere zackenförmig verlaufende Abschnitt zusammen mit dem zackenförmig verlaufenden Abschnitt eine Art Labyrinth-, Blitz- oder Zickzackführung bereitstellt, welches bzw. welcher eine unbeabsichtigte Bewegung der Aufhängungsstruktur aus der Tragposition noch besser verhindert.

Der weitere zackenförmig verlaufende Abschnitt kann einen den (weiteren) zackenförmig verlaufen Abschnitt bildenden (weiteren) ersten und (weiteren) zweiten Teilabschnitt aufweisen, wobei der (weitere) erste Teilabschnitt mit der Öffnung (direkt) verbunden ist und der (weitere) zweite Teilabschnitt (direkt) mit dem zackenförmig verlaufenden Abschnitt verbunden ist. Vorzugsweise ist der (weitere) zweite Teilabschnitt des weiteren zackenförmig verlaufenden Abschnitts der zweite Teilabschnitt des zackenförmig verlaufenden Abschnitts. Somit können die zackenförmig verlaufenden Abschnitte des Schlitzes einfach vorgesehen werden.

Der (weitere) erste und der (weitere) zweite Teilabschnitt können derart verlaufen, dass, wenn die Aufhängungsstruktur Befestigungsvorrichtung in der Tragposition trägt, eine Bewegung der Aufhängungsstruktur aus dem (weiteren) zweiten Teilabschnitt in den (weiteren) ersten Teilabschnitt und somit aus der Tragposition verhindert werden kann. Mit anderen Worten wird somit insbesondere durch den Winkel zwischen dem (weiteren) ersten Teilabschnitt und dem (weiteren) zweiten Teilabschnitt bewirkt, dass die Aufhängungsstruktur in den (weiteren) ersten Teilabschnitt und somit aus der Tragposition bewegt wird. Dieser Winkel ist vorzugsweise spitz und liegt besonders bevorzugt in einem Bereich von 70° bis 90°. Beispielsweise beträgt der Winkel im Wesentlichen 80°.

Der Schlitz verläuft bevorzugt derart, dass ein Kontaktbereich, mit welchem die Aufhängungsstruktur in der Tragposition in Kontakt steht, um die Befestigungsvorrichtung zu tragen, höher angeordnet ist als die Öffnung (auf Seiten des Kontaktbereichs), wenn die Aufhängungsstruktur die Befestigungsvorrichtung in der Tragposition trägt. Die Gewichtskraft der Befestigungsvorrichtung bewirkt somit, dass die Aufhängungsstruktur - aufgrund der Bewegung der Befestigungsvorrichtung durch deren Gewichtskraft in Richtung der Gewichtskraft - relativ zur Befestigungsvorrichtung den Höhenunterschied zwischen Öffnung und Kontaktbereich zurücklegt, um in die Tragposition zu gelangen. Die Gewichtskraft der Befestigungsvorrichtung hält die Aufhängungsstruktur somit in der Tragposition. Entsprechendes gilt für die manuelle Bewegung der Aufhängungsstruktur aus der Tragposition, bei welcher die Befestigungsvorrichtung lediglich wenigstens um den vorgenannten Höhenunterschied entgegen der Gewichtskraft bewegt werden muss.

Der Schlitz verläuft schräg zur Horizontalen, wenn die Aufhängungsstruktur die Befestigungsvorrichtung in der Tragposition trägt, sodass die Aufhängungsstruktur durch die Gewichtskraft der Befestigungsvorrichtung in die Tragposition getrieben werden kann. Somit kann die Sicherung der Aufhängungsstruktur in der Tragposition durch die Gewichtskraft der Befestigungsvorrichtung besonders einfach bereitgestellt werden. Zur besonders guten Sicherung der Aufhängungsstruktur in der Tragposition verläuft in einem besonders bevorzugten Ausführungsbeispiel der Schlitz in einem Winkel von 5° bis 15°, besonders bevorzugt in einem Winkel von 10°, zur Horizontalen, wenn die Aufhängungsstruktur die Befestigungsvorrichtung in der Tragposition trägt.

Der Schlitz ist in einer schrägen (geneigten) Fläche der Befestigungsstruktur ausgebildet, um schräg zur Horizontalen zu verlaufen, wenn die Aufhängungsstruktur die Befestigungsvorrichtung in der Tragposition trägt. Da eine schräge Fläche einfach vorzusehen ist, kann somit besonders einfach die Sicherung der Aufhängungsstruktur in der Tragposition durch die Gewichtskraft der Befestigungsvorrichtung bereitgestellt werden.

Die wenigstens eine Befestigungsstruktur kann eine weitere Öffnung aufweisen, die mit dem Schlitz, insbesondere mit dem ersten Teilabschnitt des zackenförmig verlaufenden Abschnitts, (direkt) verbunden ist und ausgebildet ist, die Aufhängungsstruktur in der Tragposition zu halten. Die Geometrie der weiteren Öffnung bewirkt somit insbesondere, dass die Aufhängungsstruktur in der Tragposition definiert, nämlich im Bereich der Öffnung, gehalten oder (partiell) aufgenommen ist. Bevorzugt ist, wenn die weitere Öffnung den vorgenannten Kontaktbereich aufweist.

Die Öffnung und/oder die weitere Öffnung können entsprechend der Aufhängungsstruktur und/oder rund, vorzugsweise kreisrund, oder mehreckig, vorzugsweise rechteckig oder quadratisch, ausgebildet sein. Somit wird vorteilhaft bezweckt, dass die Aufhängungsstruktur einfach durch die Öffnung in die Befestigungsvorrichtung eingeführt werden kann bzw. durch die weitere Öffnung definiert gehalten und vorzugsweise blockiert werden kann. Außerdem kann dadurch, dass die Öffnung entsprechend der Aufhängungsstruktur ausgebildet ist, vorteilhaft erzielt werden, dass die Aufhängungsstruktur bzw. dessen Aufhängungskörper in nur einer Ausrichtung, beispielsweise senkrecht, in die Öffnung passt, wodurch die Montage der Aufhängungsstruktur in die Befestigungsvorrichtung vereinfacht und sicherer ist. Die Öffnung ist vorzugsweise größer als die weitere Öffnung, sodass die Aufhängungsstruktur durch die Öffnung durchführbar und durch die weitere Öffnung nicht durchführbar ist. Die Öffnung hat vorzugsweise einen Durchmesser von 5 mm bis 10 mm, besonders bevorzugt 8,5 mm.

Die weitere Öffnung hat vorzugsweise einen Durchmesser von 2 mm bis 6 mm, besonders bevorzugt 4,5 mm.

Die Befestigungsvorrichtung kann wenigstens zwei, vorzugsweise drei oder vier Befestigungsstrukturen aufweisen. Dies ist insbesondere dann von Vorteil, wenn über die Befestigungsvorrichtung schwerere und/oder größere Gegenstände oder Geräte wie beispielsweise eine großflächige Leuchte, insbesondere eine Pendelleuchte, an eine entsprechende Anzahl an Aufhängungsstrukturen befestigt werden sollen. Die mehreren Befestigungsstrukturen sind vorzugsweise gleichmäßig über die Befestigungsvorrichtung verteilt (angeordnet), sodass insbesondere die Gewichtskraft der Befestigungsvorrichtung und, wenn vorhanden, die Gewichtskraft der mit dieser verbundenen Leuchte gleichmäßig auf die entsprechende Anzahl an Aufhängungsstrukturen verteilt werden kann. In einem besonders bevorzugten Ausführungsbeispiel sind die mehreren Befestigungsstrukturen in die Befestigungsvorrichtung begrenzenden Bereichen wie beispielsweise Eckbereichen ausgebildet. Dies ist insbesondere für eine gute Zugänglichkeit der Befestigungsstrukturen von Vorteil.

Die Befestigungsvorrichtung ist vorzugsweise aus Aluminium, insbesondere durch ein Aluminiumdruckgussverfahren, hergestellt. Somit kann eine gewichtsreduzierte Befestigungsvorrichtung bei gleichzeitig ausreichender Festigkeit bereitgestellt werden. Alternativ oder zusätzlich kann die wenigstens eine Befestigungsstruktur integral mit der Befestigungsvorrichtung ausgebildet sein.

Erfindungsgemäß betrifft die Erfindung ein Leuchtengehäuse aufweisend eine Befestigungsvorrichtung wie zuvor beschriebenen. Die Befestigungsvorrichtung ist vorzugsweise integral mit dem Leuchtengehäuse ausgebildet; Leuchtengehäuse und Befestigungsvorrichtung sind vorzugsweise zusammen in einem Aluminiumsdruckgussverfahren hergestellt. Alternativ kann auch vorgesehen sein, dass die Befestigungsvorrichtung lösbar mit dem Leuchtengehäuse vorgesehen ist, beispielsweise über eine Clipsverbindung.

Gemäß einem weiteren Aspekt betrifft die Erfindung eine Leuchte, insbesondere eine Pendelleuchte, aufweisend ein wie zuvor beschriebenes Leuchtengehäuse sowie wenigstens ein in dem Leuchtengehäuse aufgenommenes Leuchtmittel wie beispielsweise eine LED.

Gemäß einem noch weiteren Aspekt betrifft die Erfindung ein Leuchtensystem aufweisend eine Leuchte wie zuvor beschrieben sowie eine Aufhängungsstruktur (beispielsweise in Form einer Seilabhängung mit insbesondere am distalen Ende der Seilabhängung vorgesehenen Aufhängungskörper), wobei die Aufhängungsstruktur in der Tragposition die Befestigungsvorrichtung und somit die Leuchte trägt, sodass die Leuchte über die Befestigungsvorrichtung an der Aufhängungsstruktur befestigt ist.

### 4. Beschreibung einer bevorzugten Ausführungsform:

Nachfolgend wird die Erfindung anhand der Figuren, in denen ein vorteilhaftes Ausführungsbeispiel der Erfindung dargestellt ist, beispielhaft beschrieben. In den Figuren zeigen:
- **Figur 1**: eine schematische Draufsicht einer bevorzugten Ausführungsform der erfindungsgemäßen Befestigungsvorrichtung;
- **Figur 2**: eine schematische perspektivische Detailansicht einer Befestigungsstruktur der in Figur 1 gezeigten Befestigungsvorrichtung; und
- **Figur 3**: eine Detailansicht der in Figur 2 gezeigten Befestigungsstruktur in einer Draufsicht.

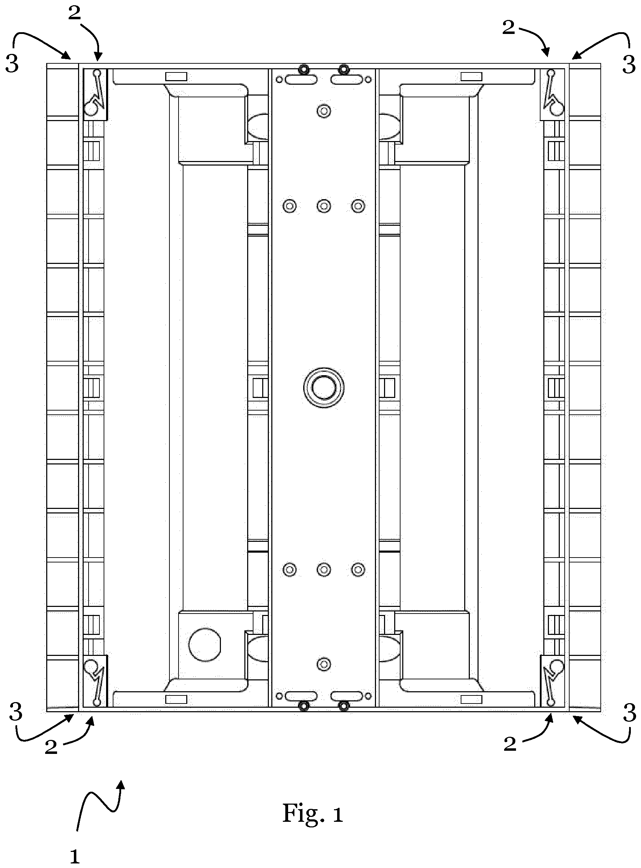

Figur 1 zeigt beispielhaft eine Befestigungsvorrichtung 1 gemäß einer bevorzugten Ausführungsform. Die Befestigungsvorrichtung 1 ist vorgesehen, um eine Leuchte, insbesondere eine Pendelleuchte, oder ein sonstiges abgehängtes Element, insbesondere ein (elektrisches) Gerät oder auch eine abgehängte Decke, an eine nicht näher dargestellte Aufhängungsstruktur (Abhängestruktur oder Abhängemöglichkeit) zu befestigen. Die Aufhängungsstruktur hängt in der Regel von einer Decke senkrecht oder schrägverlaufend, beispielsweise in einem Winkel von 45° zur Vertikalen, runter. Die Aufhängungsstruktur weist vorzugsweise einen insbesondere am distalen Ende der Aufhängungsstruktur vorgesehenen Aufhängungskörper auf. Beispielsweise ist die Aufhängungsstruktur in Form einer Seilabhängung ausgebildet. Vorzugsweise ist der Aufhängungskörper als Nippel oder Kugel ausgebildet. Auch sonstige Geometrien des Aufhängungskörpers sind denkbar, beispielsweise Aufhängungskörper mit mehreckigem (rechteckig, quadratisch etc.) oder rundem (kreisrund, elliptisch etc.) Querschnitt.

Die Befestigungsvorrichtung 1 ist in Draufsicht gesehen vorzugsweise rechteckig ausgebildet. Die Befestigungsvorrichtung 1 kann in Draufsicht jedoch auch jegliche andere Form aufweisen, beispielsweise eine mehreckige (quadratische etc.) oder runde (kreisrunde, elliptische etc.) Form.

Die Befestigungsvorrichtung 1 weist wenigstens eine Befestigungsstruktur 2 auf. Die Befestigungsvorrichtung 1 kann auch mehr als eine Befestigungsstruktur 2 aufweisen, also wenigstens zwei, vorzugsweise drei oder - wie in Figur 1 gut erkennbar - vier Befestigungsstrukturen 2. Wie Figur 1 gut erkennen lässt, können die Befestigungsstrukturen 2 gleichmäßig über die Befestigungsvorrichtung 1 verteilt sein. Beispielsweise sind die Befestigungsstrukturen 2 in die Befestigungsvorrichtung 1 begrenzenden Bereichen wie beispielsweise Eckbereichen 3 ausgebildet. Die Befestigungsvorrichtung 1 kann jedoch auch nur eine Befestigungsstruktur 2 aufweisen, welche dann beispielsweise mittig in der Befestigungsvorrichtung 1 ausgebildet ist. Nur eine Befestigungsstruktur 2 ist insbesondere bei einer Kugelleuchte von Vorteil.

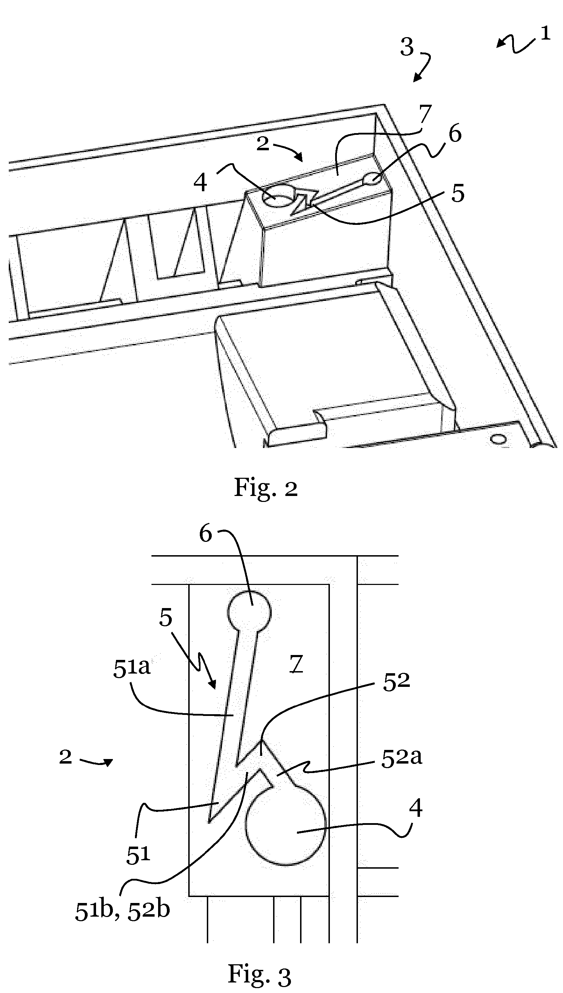

Im Folgenden wird insbesondere mit Bezug auf die Figuren 2 und 3 eine der Befestigungsstrukturen 2 beispielhaft beschrieben. Die Beschreibung dieser Befestigungsstruktur 2 gilt für die weitere(n) Befestigungsstruktur(en) 2 analog, sofern nicht anders beschrieben.

Die Befestigungsstruktur 2 weist eine Öffnung 4 auf, über welche die Aufhängungsstruktur (teilweise) bzw. der Aufhängungskörper der Aufhängungsstruktur (komplett) in die Befestigungsvorrichtung 1 eingeführt werden kann. Die Öffnung 4 ist vorzugsweise entsprechend der Aufhängungsstruktur, insbesondere entsprechend dem Aufhängungskörper, ausgebildet, also beispielsweise rund, vorzugsweise kreisrund oder elliptisch. Die Öffnung 4 kann jedoch auch mehreckig, insbesondere rechteckig oder quadratisch ausgebildet sein. Wichtig ist lediglich das die Aufhängungsstruktur bzw. dessen Aufhängungskörper über die Öffnung 4 in die Befestigungsvorrichtung 1 eingeführt werden kann. Die Öffnung 4 hat vorzugsweise einen Durchmesser von 5 mm bis 10 mm, besonders bevorzugt 8,5 mm. In anderen Ausführungsbeispielen, insbesondere bei besonders schweren Gegenständen bzw. Leuchten, kann der Durchmesser auch über 10 mm betragen.

Mit der Öffnung 4 ist ein Schlitz 5 vorzugsweise direkt verbunden, sodass die über die Öffnung 4 in die Befestigungsvorrichtung 1 eingeführte Aufhängungsstruktur über den Schlitz 5 in eine Tragposition bewegbar ist. Die Aufhängungsstruktur kann somit entlang des Schlitzes 5 bewegt werden, jedoch nicht über den Schlitz 5 aus der Befestigungsvorrichtung 1 heraus bewegt werden. Vorzugsweise ist der Schlitz 5 so breit ausgebildet, dass der Aufhängungskörper, falls vorhanden, und somit die Aufhängungsstruktur nicht über den Schlitz 5 aus der Befestigungsvorrichtung 1 geführt werden kann. Der Schlitz 5 ist entlang seiner Erstreckungsrichtung vorzugsweise konstant breit ausgebildet.

Die Aufhängungsstruktur ist somit über den Schlitz 5 in eine Tragposition bewegbar, in der die Aufhängungsstruktur die Befestigungsvorrichtung 1 hängend trägt. Die Tragposition erreicht die Aufhängungsstruktur vorzugsweise dann, wenn die Aufhängungsstruktur in kraft- und/oder formschlüssigen Kontakt mit einem (definierten) Kontaktbereich kommt. In dem in den Figuren gezeigten Ausführungsbeispiel erreicht die Aufhängungsstruktur die Tragposition insbesondere dann, wenn diese eine weitere Öffnung 6, die mit der Befestigungsstruktur 2 ausgebildet ist, erreicht. Im Allgemeinen ist die Tragposition jede Position, in der die Aufhängungsstruktur die Befestigungsvorrichtung hängend tragen kann, die Trageposition umfasst somit insbesondere nicht die Öffnung 4. Die weitere Öffnung 6 ist also auch mit dem Schlitz 5 verbunden. Insbesondere über die Geometrie der weiteren Öffnung 6 kann somit die Aufhängungsstruktur, insbesondere dessen Aufhängungskörper, in der Tragposition gehalten werden. Vorzugsweise weist die weitere Öffnung 6 den Kontaktbereich auf. Beispielsweise wird der Kontaktbereich durch den Umfang der weiteren Öffnung 6 gebildet.

Die weitere Öffnung 6 weist bevorzugt eine der Aufhängungsstruktur, insbesondere dem Aufhängungskörper, entsprechende Form auf. Beispielsweise ist die weitere Öffnung 6 rund, vorzugsweise kreisrund, oder mehreckig, vorzugsweise rechteckig oder quadratisch ausgebildet. Die weitere Öffnung 6 ist vorzugsweise kleiner als die Öffnung 4 ausgebildet, sodass durch die weitere Öffnung 6 die Aufhängungsstruktur, insbesondere dessen Aufhängungskörper, nicht durchführbar ist. Besonders bevorzugt ist, wenn die weitere Öffnung 6 einen Durchmesser von 2 mm bis 6 mm, beispielsweise 4,5 mm, hat.

Der Schlitz 5 weist einen zackenförmig verlaufenden Abschnitt 51 auf, welcher ausgebildet ist, eine Bewegung der Aufhängungsstruktur aus der Tragposition zu verhindern. Dies wird in dem in den Figuren gezeigten Ausführungsbeispiel so bewirkt, dass der zackenförmig verlaufende Abschnitt 51 einen den zackenförmig verlaufenden Abschnitt 51 bzw. die Zackenform des Abschnitts 51 bildenden ersten Teilabschnitt 51a und zweiten Teilabschnitt 51b aufweist. Die Teilabschnitte 51a, 51b sind jeweils vorzugsweise geradlinig verlaufend ausgebildet. Der erste Teilabschnitt 51a verläuft dabei vorzugsweiche in Richtung der Tragposition bzw. der weiteren Öffnung 6, d. h. ist mit der weiteren Öffnung 6 vorzugsweise (direkt) verbunden. Der zweite Teilabschnitt 51b verläuft vorzugsweise mit einer Erstreckungsrichtung, die weder in Richtung der Öffnung 4 noch in Richtung der Tragposition bzw. der weiteren Öffnung 6 zeigt. Die Teilabschnitte 51a, 51b verlaufen derart, dass, wenn die Aufhängungsstruktur die Befestigungsvorrichtung 1 in der Tragposition trägt, also die Aufhängungsstruktur insbesondere im Bereich der weiteren Öffnung 6 oder im ersten Teilabschnitt 51a vorgesehen ist, eine Bewegung der Aufhängungsstruktur aus dem ersten Teilabschnitt 51a in den zweiten Teilabschnitt 51b und somit aus der Tragposition verhindert wird. Dies erfolgt, indem der Winkel zwischen den Teilabschnitten 51a und 51b entsprechend gewählt wird, beispielsweise als spitzer Winkel. Erfindungsgemäß liegt dieser Winkel in einem Bereich von 20° bis 70°, bevorzugt in einem Bereich von 30° bis 50°, beträgt beispielsweise im Wesentlichen 37°.

Der erste Teilabschnitt 51a ist vorzugsweise länger ausgebildet als der zweite Teilabschnitt 51b. Beispielsweise beträgt die Länge des ersten Teilabschnitts 51a einem Vielfachen der Länge des zweiten Teilabschnitts 51b; der erste Teilabschnitt 51a ist also vorzugsweise länglich ausgebildet. Insbesondere kann der erste Teilabschnitt 51a doppelt oder dreimal so lang wie der zweite Teilabschnitt 51b ausgebildet sein. Somit können auf die Befestigungsvorrichtung 1 wirkende Stöße und Kräfte besonders effektiv von dem ersten Teilabschnitt 51a aufgefangen werden.

Der Schlitz 5 weist wenigstens einen weiteren zackenförmig verlaufenden Abschnitt 52 auf der mit der Offnung 4 und dem zackenförmig verlaufenden Abschnitt 51 verbunden ist, sodass die über die Öffnung 4 in die Befestigungsvorrichtung 1 eingeführte Aufhängungsstruktur über den weiteren zackenförmig verlaufenden Abschnitt 52 und den zackenförmig verlaufenden Abschnitt 51 in die Tragposition bewegbar ist. Der weitere zackenförmige Abschnitt 52 bewirkt dabei, dass eine Bewegung der Aufhängungsstruktur aus der Tragposition, d. h. insbesondere in die Öffnung 4, noch besser verhindert werden kann. Dies wird in dem in den Figuren gezeigten Ausführungsbeispiel so bewirkt, dass der weitere zackenförmig verlaufende Abschnitt 52 einen den weiteren zackenförmig verlaufenden Abschnitt 52 bzw. die Zackenform des Abschnitts 52 bildenden (weiteren) ersten Teilabschnitt 52a und (weiteren) zweiten Teilabschnitt 52b aufweist, wobei, wie in den Figuren 2 und 3 gut erkennbar, der (weitere) zweite Teilabschnitt 52b vorzugsweise der zweite Teilabschnitt 51b ist. Die Teilabschnitte 52a, 52b sind jeweils vorzugsweise geradlinig verlaufend ausgebildet. Alternativ kann jedoch auch vorgesehen sein, dass der zweite Teilabschnitt 51b indirekt mit dem zweiten Teilabschnitt 52b verbunden ist. Der (weitere) erste Teilabschnitt 52a ist vorzugsweise mit der Öffnung 4 (direkt) verbunden.

Bevorzugt ist, wenn der (weitere) erste Teilabschnitt 52a und der (weitere) zweite Teilabschnitt 52b derart verlaufen, dass, wenn die Aufhängungsstruktur die Befestigungsvorrichtung 1 in der Tragposition trägt, eine Bewegung der Aufhängungsstruktur aus dem (weiteren) zweiten Teilabschnitt 52b in den (weiteren) ersten Teilabschnitt 52a und somit aus der Tragposition bzw. in die Öffnung 4 verhindert werden kann. Hierfür verlaufen die Teilabschnitte 52a, 52b vorzugsweise in einem definierten, insbesondere spitzen Winkel. Beispielsweise liegt der definierte Winkel zwischen den Teilabschnitten 52a und 52b in einem Bereich von 70° bis 90° liegt. Vorzugsweise beträgt der vorgenannte Winkel im Wesentlichen 80°. Die Teilabschnitte 52a, 52b sind vorzugsweise im Wesentlichen gleich lang ausgebildet.

Wie in Figur 3 gut erkennbar, ergibt sich somit bevorzugt folgende Erstreckung der Teilabschnitte 51a, 51b, 52a, 52b ausgehend von der Öffnung 4: Der Teilabschnitt 52a führt von der Öffnung 4 weg, an den Teilabschnitt 52a anschließend führt der Teilabschnitt 51b bzw. 52b von der weiteren Öffnung 6 weg, und an den Teilabschnitt 51b bzw. 52 anschließend führt der Teilabschnitt 51a zu der weiteren Öffnung 4 (geradlinig) hin. Die zackenförmig verlaufenden Abschnitte 51, 52 bilden somit eine Art Labyrinth-, Zickzack oder Blitzführung, welche ein Herausbewegen der Aufhängungsstruktur aus der Tragposition, also insbesondere ein ungewolltes Bewegen der Aufhängungsstruktur in die Öffnung 4, besonders gut verhindern bzw. erschweren.

Der Schlitz 5 kann auch mehr als einen weiteren zackenförmig verlaufenden Abschnitt 52 aufweisen, beispielsweise zwei oder drei weitere zackenförmigen Abschnitte, sodass beispielsweise ein erster die jeweilige Zacke bildender Teilabschnitt eines weiteren zackenförmigen Abschnitts der zweite Teilabschnitt der Zacke des jeweils nächsten weiteren zackenförmigen Abschnitts ist, usw. Je mehr zackenförmig verlaufende Abschnitte bzw. Richtungsänderungen der Schlitz 5 aufweist, desto besser kann die Aufhängungsstruktur in der Tragposition gesichert werden.

Zusätzlich zu der wie oben beschriebenen zackenförmigen Ausbildung des Schlitzes ist der Schlitz 5 auch derart ausgebildet, dass die Aufhängungsstruktur durch die Gewichtskraft der Befestigungsvorrichtung 1 in die Tragposition, also insbesondere in die weitere Öffnung 6, getrieben werden kann. In dem in den Figuren gezeigten Ausführungsbeispiel wird dies bewirkt, indem in einem Zustand, in dem die Aufhängungsstruktur die Befestigungsvorrichtung 1 in der Tragposition trägt, der Schlitz 5 derart verläuft, dass der Kontaktbereich, mit welchem die Aufhängungsstruktur in der Tragposition in Kontakt steht, um die Befestigungsvorrichtung 1 zu tragen, höher angeordnet ist als die Öffnung 4. Wie insbesondere die Figur 2 gut erkennen lässt, wird dies in dem in den Figuren gezeigten Ausführungsbeispiel bevorzugt so bewirkt, dass die weitere Öffnung 6 höher angeordnet ist als die Öffnung 4. Das heißt, wenn die weitere Öffnung 6 den Kontaktbereich bereitstellt, ist der Kontaktbereich vorzugsweise höher angeordnet als die Öffnung 4 auf Seiten des Kontaktbereichs.

Beispielsweise kann in einem Zustand, in dem die Aufhängungsstruktur die Befestigungsvorrichtung 1 in der Tragposition trägt, der Schlitz 5 schräg zur Horizontalen verlaufen, sodass insbesondere der zuvor genannte Höhenunterschied zwischen Öffnung 4 und der weiteren Öffnung 6 bereitgestellt ist. Auf diese Weise kann sich die Aufhängungsstruktur durch die Gewichtskraft der Befestigungsvorrichtung 1 relativ zur Befestigungsvorrichtung 1 bewegen und in die Tragposition getrieben werden. Wie Figur 2 gut erkennen lässt, verläuft der Schlitz 5 vorzugsweise in einem Winkel von 5° bis 15°, besonders bevorzugt in einem Winkel von 10° zur Horizontalen, wenn die Aufhängungsstruktur die Befestigungsvorrichtung 1 in der Tragposition trägt. Vorzugsweise weist die Befestigungsstruktur 2 eine bezüglich der (Haupterstreckungsrichtung der) Befestigungsvorrichtung 1 schräge Fläche 7 auf, in der der Schlitz 5 ausgebildet ist, sodass der Schlitz 5 schräg zur Horizontalen verläuft, wenn die Aufhängungsstruktur die Befestigungsvorrichtung 1 in der Tragposition trägt. Die Öffnung 5 ist somit an einem tieferliegenden Bereich der Neigung der Fläche 7 vorgesehen, wobei die weitere Öffnung 6 an einem höherliegenden Bereich der Neigung der Fläche 7 vorgesehen ist; die Neigung der Fläche 7 führt also von der Öffnung 5 zur weiteren Öffnung 7.

Die Befestigungsvorrichtung 1 ist vorzugsweise aus Aluminium hergestellt. Alternativ oder zusätzlich kann jedoch auch vorgesehen sein, dass die Befestigungsvorrichtung 1 aus einem anderen Material hergestellt ist, beispielsweise aus Kunststoff. Bevorzugt wird ein Aluminiumdruckgussverfahren verwendet, um die Befestigungsvorrichtung 1 herzustellen. Die Befestigungsstruktur 2 ist vorzugsweise integral mit der Befestigungsvorrichtung 1, also insbesondere mit der Befestigungsvorrichtung 1 aus einem Guss hergestellt.

Wie insbesondere die Figur 2 gut erkennen lässt, weist der Schlitz 5 vorzugsweise sowohl die oben beschriebene zacken-, labyrinth- oder blitzförmige Ausbildung als auch die Ausbildung derart, dass die Aufhängungsstruktur durch die Gewichtskraft der Befestigungsvorrichtung 1 in Tragposition getrieben werden kann, auf. Somit kann eine besonders gute Sicherung der Aufhängungsstruktur in der Tragposition gewährleistet werden. Zur ausreichenden Sicherung der Aufhängungsstruktur in der Tragposition ohne separat bereitgestellte Sicherungsmittel ist es erfindungsgemäß jedoch bereits ausreichend, wenn der Schlitz 5 nur wie oben beschrieben zackenförmig verläuft oder der Schlitz 5 nur derart ausgebildet ist, dass die Aufhängungsstruktur durch die Gewichtskraft der Befestigungsvorrichtung 1 in die Tragposition getrieben werden kann.

Die Befestigungsvorrichtung 1 kann Teil eines Leuchtengehäuses sein oder das Leuchtengehäuse teilweise bilden. Die Befestigungsvorrichtung 1 kann Strukturen aufweisen, über welche Teile des Leuchtengehäuses bzw. der Leuchte, insbesondere Komponenten zum Betrieb der Leuchte wie beispielsweise ein Betriebsgerät, aufgenommen werden können. Besonders bevorzugt ist, wenn die Befestigungsvorrichtung 1 integral mit dem Leuchtengehäuse ausgebildet ist. Alternativ kann die Befestigungsvorrichtung 1 mit dem Leuchtengehäuse auch lösbar verbunden sein, beispielsweise über entsprechende Befestigungsmittel wie eine Clipsverbindung.

Die vorliegende Erfindung ist jedoch nicht auf das vorhergehende bevorzugte Ausführungsbeispiel beschränkt, solange sie vom Gegenstand der folgenden Ansprüche umfasst ist.

## Patentansprüche

1. Leuchtengehäuse, aufweisend eine Befestigungsvorrichtung (1) zur Befestigung einer Leuchte wie beispielsweise einer Pendelleuchte an eine Aufhängungsstruktur, mit wenigstens einer Befestigungsstruktur (2), wobei die wenigstens eine Befestigungsstruktur (2) aufweist:
eine Öffnung (4) und einen mit der Öffnung (4) verbundenen Schlitz (5), welche derart ausgebildet sind, dass eine über die Öffnung (4) in die Befestigungsvorrichtung (1) eingeführte Aufhängungsstruktur über den Schlitz (5) in eine Tragposition bewegbar ist, in der die Aufhängungsstruktur die Befestigungsvorrichtung (1) hängend trägt,
wobei der Schlitz (5) einen zackenförmig verlaufenden Abschnitt (51; 52) zum Verhindern einer Bewegung der Aufhängungsstruktur aus der Tragposition aufweist,
• wobei der zackenförmig verlaufende Abschnitt (51) einen den zackenförmig verlaufenden Abschnitt (51) bildenden ersten und zweiten Teilabschnitt (51a, 51b) aufweist,
∘ wobei der erste und der zweite Teilabschnitt (51a, 51b) derart verlaufen, dass, wenn die Aufhängungsstruktur die Befestigungsvorrichtung (1) in der Tragposition trägt, eine Bewegung der Aufhängungsstruktur aus dem ersten Teilabschnitt (51a) in den zweiten Teilabschnitt (51b) und somit aus der Tragposition verhindert wird, und
wobei der Schlitz (5) derart ausgebildet ist, dass die Aufhängungsstruktur (1) durch die Gewichtskraft der Befestigungsvorrichtung in die Tragposition getrieben werden kann,
**dadurch gekennzeichnet, dass**
der Winkel zwischen dem ersten Teilabschnitt (51a) und dem zweiten Teilabschnitt (51b) in einem Bereich von 20° bis 70° liegt,
und dass der Schlitz (6) einen weiteren zackenförmig verlaufenden Abschnitt (52) aufweist,
wobei der weitere zackenförmig verlaufende Abschnitt (52) mit der Öffnung (4) und dem zackenförmig verlaufenden Abschnitt (51) verbunden ist, sodass die über die Öffnung (4) in die Befestigungsvorrichtung (1) eingeführte Aufhängungsstruktur über den weiteren zackenförmigen Abschnitt (52) und den zackenförmig verlaufenden Abschnitt (51) in die Tragposition bewegbar ist und die zackenförmig verlaufenden Abschnitte (51, 52) eine Bewegung der Aufhängungsstruktur aus der Tragposition verhindern können,
wobei der Schlitz (5) in einer schrägen Fläche (7) der Befestigungsstruktur (2) ausgebildet ist, um schräg zur Horizontalen zu verlaufen, wenn die Aufhängungsstruktur die Befestigungsvorrichtung (1) in der Tragposition trägt.

2. Leuchtengehäuse nach Anspruch 1,
wobei der erste Teilabschnitt (51a) länger ist als der zweite Teilabschnitt (51b), und/oder
wobei der Winkel zwischen dem ersten Teilabschnitt (51a) und dem zweiten Teilabschnitt (51b) in einem Bereich von 30° bis 50° liegt, beispielsweise im Wesentlichen 37° beträgt.

3. Leuchtengehäuse nach einem der vorhergehenden Ansprüche, wobei der weitere zackenförmig verlaufende Abschnitt (52) einen den weiteren zackenförmig verlaufenden Abschnitt (52) bildenden weiteren ersten und weiteren zweiten Teilabschnitt (52a, 52b) aufweist, wobei der weitere erste Teilabschnitt (52a) mit der Öffnung (4) verbunden ist und der weitere zweite Teilabschnitt (52) mit dem zackenförmig verlaufenden Abschnitt (51) verbunden ist, wobei der weitere zweite Teilabschnitt (52b) des weiteren zackenförmig verlaufenden Abschnitts (52) vorzugsweise der zweite Teilabschnitt (51b) des zackenförmig verlaufenden Abschnitts (51) ist.

4. Leuchtengehäuse nach Anspruch 3, wobei der weitere erste und der weitere zweite Teilabschnitt (52a, 52b) derart verlaufen, dass, wenn die Aufhängungsstruktur die Befestigungsvorrichtung (1) in der Tragposition trägt, eine Bewegung der Aufhängungsstruktur aus dem weiteren zweiten Teilabschnitt (52b) in den weiteren ersten Teilabschnitt (52a) und somit aus der Tragposition verhindert werden kann, wobei der Winkel zwischen dem weiteren ersten Teilabschnitt (52a) und dem weiteren zweiten Teilabschnitt (52b) vorzugsweise in einem Bereich von 70° bis 90° liegt, beispielsweise im Wesentlichen 80° beträgt.

5. Leuchtengehäuse nach einem der vorhergehenden Ansprüche, wobei der Schlitz (5) derart verläuft, dass ein Kontaktbereich, mit welchem die Aufhängungsstruktur in der Tragposition in Kontakt steht, um die Befestigungsvorrichtung (1) zu tragen, höher angeordnet ist als die Öffnung (4), wenn die Aufhängungsstruktur die Befestigungsvorrichtung (1) in der Tragposition trägt.

6. Leuchtengehäuse nach einem der vorhergehenden Ansprüche, wobei der Schlitz (5) schräg zur Horizontalen verläuft, wenn die Aufhängungsstruktur die Befestigungsvorrichtung (1) in der Tragposition trägt, sodass die Aufhängungsstruktur durch die Gewichtskraft der Befestigungsvorrichtung (1) in die Tragposition getrieben werden kann, wobei der Schlitz vorzugsweise in einem Winkel von 5° bis 15°, besonders bevorzugt in einem Winkel von 10°, zur Horizontalen verläuft, wenn die Aufhängungsstruktur die Befestigungsvorrichtung (1) in der Tragposition trägt.

7. Leuchtengehäuse nach einem der vorhergehenden Ansprüche, wobei die wenigstens eine Befestigungsstruktur (2) eine weitere Öffnung (6) aufweist, die mit dem Schlitz (5), insbesondere mit dem ersten Teilabschnitt (51a) des zackenförmig verlaufenden Abschnitts (51), verbunden ist und ausgebildet ist, die Aufhängungsstruktur in der Tragposition halten zu können, wobei die weitere Öffnung (6) vorzugsweise den Kontaktbereich aufweist.

8. Leuchtengehäuse nach einem der vorhergehenden Ansprüche, wobei die Öffnung (4) und/oder die weitere Öffnung (6) entsprechend der Aufhängungsstruktur und/oder rund, vorzugsweise kreisrund, oder mehreckig, vorzugsweise rechteckig oder quadratisch ausgebildet ist/sind, und/oder wobei die Öffnung (4) größer ist als die weitere Öffnung (6), sodass die Aufhängungsstruktur durch die Öffnung (4) durchführbar und durch die weitere Öffnung (6) nicht durchführbar ist, wobei die Öffnung (4) vorzugsweise einen Durchmesser von 5 mm bis 10 mm, besonders bevorzugt 8,5 mm hat, und/oder wobei die weitere Öffnung (6) vorzugsweise einen Durchmesser von 2 mm bis 6 mm, besonders bevorzugt 4,5 mm hat.

9. Leuchtengehäuse nach einem der vorhergehenden Ansprüche, mit wenigstens zwei, vorzugsweise drei oder vier Befestigungsstrukturen (2), welche vorzugsweise gleichmäßig über die Befestigungsvorrichtung (1) verteilt sind und/oder vorzugsweise in die Befestigungsvorrichtung (1) begrenzenden Bereichen wie beispielsweise Eckbereichen (3) ausgebildet sind.

10. Leuchtengehäuse nach einem der vorhergehenden Ansprüche, wobei die Befestigungsvorrichtung (1) aus Aluminium, insbesondere durch ein Aluminiumdruckgussverfahren, hergestellt ist, und/oder wobei die wenigstens eine Befestigungsstruktur (2) integral mit der Befestigungsvorrichtung (1) ausgebildet ist.

11. Leuchtengehäuse nach einem der vorhergehenden Ansprüche, wobei die Befestigungsvorrichtung (1) integral oder lösbar mit dem Leuchtengehäuse verbunden ist.

12. Leuchte, insbesondere Pendelleuchte, aufweisend ein Leuchtengehäuse nach einem der vorhergehenden Ansprüche sowie wenigstens ein in dem Leuchtengehäuse aufgenommenes Leuchtmittel wie beispielsweise eine LED.

13. Leuchtensystem, aufweisend eine Leuchte nach dem vorhergehenden Anspruch sowie eine Aufhängungsstruktur, wobei die Aufhängungsstruktur in der Tragposition die Befestigungsvorrichtung (1) und somit die Leuchte trägt, sodass die Leuchte über die Befestigungsvorrichtung (1) an der Aufhängungsstruktur befestigt ist.

## Claims

1. Luminaire housing, comprising a fastening device (1) for fastening a luminaire such as a pendant luminaire to a suspension structure, having at least one fastening structure (2), the at least one fastening structure (2) comprising:
an opening (4) and a slot (5) connected to the opening (4), which are designed such that a suspension structure introduced into the fastening device (1) via the opening (4) can be moved via the slot (5) into a supporting position in which the suspension structure supports the fastening device (1) in a suspended manner, the slot (5) having a jagged portion (51, 52) for preventing movement of the suspension structure from the supporting position,
• the jagged portion (51) having a first and second partial portion (51a, 51b) forming the jagged portion (51),
∘ the first and the second partial portion (51a, 51b) extending such that, when the suspension structure supports the fastening device (1) in the supporting position, a movement of the suspension structure from the first partial portion (51a) into the second partial portion (51b) and thus from the supporting position is prevented, and
the slot (5) being designed such that the suspension structure (1) can be driven into the supporting position by the weight of the fastening device,
**characterized in that** the angle between the first partial portion (51a) and the second partial portion (51b) is in a range of 20° to 70°,
• **and in that** the slot (6) has a further jagged portion (52),
the further jagged portion (52) being connected to the opening (4) and the jagged portion (51), so that the suspension structure introduced into the fastening device (1) via the opening (4) can be moved into the supporting position via the further jagged portion (52) and the jagged portion (51) and the jagged portions (51, 52) can prevent movement of the suspension structure from the supporting position,
the slot (5) being formed in an inclined surface (7) of the fastening structure (2) to extend inclined to the horizontal when the suspension structure supports the fastening device (1) in the supporting position.

2. Luminaire housing according to claim 1,
wherein the first partial portion (51a) is longer than the second partial portion (51b), and/or
wherein the angle between the first partial portion (51a) and the second partial portion (51b) is in a range of 30° to 50°, for example substantially 37°.

3. Luminaire housing according to either of the preceding claims, wherein the further jagged portion (52) has a further first and a further second partial portion (52a, 52b) forming the further jagged portion (52), wherein the further first partial portion (52a) is connected to the opening (4) and the further second partial portion (52) is connected to the jagged portion (51), wherein the further second partial portion (52b) of the further jagged portion (52) is preferably the second partial portion (51b) of the jagged portion (51).

4. Luminaire housing according to claim 3, wherein the further first and the further second partial portions (52a, 52b) extend in such a way that, when the suspension structure supports the fastening device (1) in the supporting position, a movement of the suspension structure from the further second partial portion (52b) into the further first partial portion (52a) and thus from the supporting position can be prevented, wherein the angle between the further first partial portion (52a) and the further second partial portion (52b) is preferably in a range of 70° to 90°, for example substantially 80°.

5. Luminaire housing according to any of the preceding claims, wherein the slot (5) extends such that a contact region with which the suspension structure is in contact in the supporting position in order to support the fastening device (1) is arranged higher than the opening (4) when the suspension structure supports the fastening device (1) in the supporting position.

6. Luminaire housing according to any of the preceding claims, wherein the slot (5) extends inclined to the horizontal when the suspension structure supports the fastening device (1) in the supporting position, so that the suspension structure can be driven into the supporting position by the weight of the fastening device (1), wherein the slot preferably extends at an angle of 5° to 15°, particularly preferably at an angle of 10°, to the horizontal when the suspension structure supports the fastening device (1) in the supporting position.

7. Luminaire housing according to any of the preceding claims, wherein the at least one fastening structure (2) has a further opening (6) which is connected to the slot (5), in particular to the first partial portion (51a) of the jagged portion (51), and is designed to be able to hold the suspension structure in the supporting position, wherein the further opening (6) preferably has the contact region.

8. Luminaire housing according to any of the preceding claims, wherein the opening (4) and/or the further opening (6) is/are designed to correspond to the suspension structure and/or is/are round, preferably circular, or polygonal, preferably rectangular or square, and/or wherein the opening (4) is larger than the further opening (6), so that the suspension structure can be passed through the opening (4) and cannot be passed through the further opening (6), wherein the opening (4) preferably has a diameter of 5 mm to 10 mm, particularly preferably 8.5 mm, and/or wherein the further opening (6) preferably has a diameter of 2 mm to 6 mm, particularly preferably 4.5 mm.

9. Luminaire housing according to any of the preceding claims, having at least two, preferably three or four fastening structures (2), which are preferably evenly distributed over the fastening device (1) and/or are preferably formed in regions delimiting the fastening device (1), such as corner regions (3).

10. Luminaire housing according to any of the preceding claims, wherein the fastening device (1) is made of aluminum, in particular by an aluminum die-casting process, and/or wherein the at least one fastening structure (2) is formed integrally with the fastening device (1).

11. Luminaire housing according to any of the preceding claims, wherein the fastening device (1) is integrally or detachably connected to the luminaire housing.

12. Luminaire, in particular a pendant luminaire, comprising a luminaire housing according to any of the preceding claims and at least one light source accommodated in the luminaire housing, such as an LED.

13. Luminaire system, comprising a luminaire according to the preceding claim and a suspension structure, wherein the suspension structure supports the fastening device (1) and thus the luminaire in the supporting position, so that the luminaire is fastened to the suspension structure via the fastening device (1).

## Revendications

1. Boîtier de luminaire présentant un dispositif de fixation (1) destiné à fixer un luminaire, tel que par exemple un luminaire suspendu, à une structure de suspension, comportant au moins une structure de fixation (2), ladite au moins une structure de fixation (2) présentant :
une ouverture (4) et une fente (5) reliée à l'ouverture (4), qui sont réalisées de telle sorte qu'une structure de suspension introduite dans le dispositif de fixation (1) par l'intermédiaire de l'ouverture (4) peut être déplacée par l'intermédiaire de la fente (5) dans une position de support, dans laquelle la structure de suspension supporte le dispositif de fixation (1) en suspension, la fente (5) présentant une section (51 ; 52) s'étendant en forme de dentelure afin d'empêcher un déplacement de la structure de suspension à partir de la position de support,
• la section (51) s'étendant en forme de dentelure présentant une première et une seconde section partielle (51a, 51b) formant la section (51) s'étendant en forme de dentelure,
∘ la première et la seconde section partielle (51a, 51b) s'étendant de telle sorte que, lorsque la structure de suspension supporte le dispositif de fixation (1) dans la position de support, un déplacement de la structure de suspension à partir de la première section partielle (51a) dans la seconde section partielle (51b) et par conséquent à partir de la position de support est empêché et
la fente (5) étant réalisée de telle sorte que la structure de suspension (1) peut être entraînée dans la position de support par le poids du dispositif de fixation,
**caractérisé en ce que** l'angle entre la première section partielle (51a) et la seconde section partielle (51b) est situé dans une plage de 20° à 70°,
• et **en ce que** la fente (6) présente une autre section (52) s'étendant en forme de dentelure,
l'autre section (52) s'étendant en forme de dentelure étant reliée à l'ouverture (4) et à la section (51) s'étendant en forme de dentelure, de telle sorte que la structure de suspension introduite dans le dispositif de fixation (1) par l'intermédiaire de l'ouverture (4) peut être déplacée dans la position de support par l'intermédiaire de l'autre section (52) s'étendant en forme de dentelure et de la section (51) s'étendant en forme de dentelure et les sections (51, 52) s'étendant en forme de dentelure pouvant empêcher un déplacement de la structure de suspension à partir de la position de support,
la fente (5) étant réalisée dans une surface inclinée (7) de la structure de fixation (2) de manière à s'étendre de manière inclinée par rapport à l'horizontale lorsque la structure de suspension supporte le dispositif de fixation (1) dans la position de support.

2. Boîtier de luminaire selon la revendication 1,
la première section partielle (51a) étant plus longue que la seconde section partielle (51b) et/ou
l'angle entre la première section partielle (51a) et la seconde section partielle (51b) étant situé dans une plage de 30° à 50°, par exemple étant sensiblement de 37°.

3. Boîtier de luminaire selon l'une des revendications précédentes, l'autre section (52) s'étendant en forme de dentelure présentant une autre première et une autre seconde section partielle (52a, 52b) formant l'autre section (52) s'étendant en forme de dentelure, l'autre première section partielle (52a) étant reliée à l'ouverture (4) et l'autre seconde section partielle (52) étant reliée à la section (51) s'étendant en forme de dentelure, l'autre seconde section partielle (52b) de l'autre section (52) s'étendant en forme de dentelure étant de préférence la seconde section partielle (51b) de la section (51) s'étendant en forme de dentelure.

4. Boîtier de luminaire selon la revendication 3, l'autre première et l'autre seconde section partielle (52a, 52b) s'étendant de telle sorte que, lorsque la structure de suspension supporte le dispositif de fixation (1) dans la position de support, un déplacement de la structure de suspension à partir de l'autre seconde section partielle (52b) dans l'autre première section partielle (52a) et par conséquent à partir de la position de support peut être empêché, l'angle entre l'autre première section partielle (52a) et l'autre seconde section partielle (52b) étant de préférence situé dans une plage de 70° à 90°, par exemple étant sensiblement de 80°.

5. Boîtier de luminaire selon l'une des revendications précédentes, la fente (5) s'étendant de telle sorte qu'une zone de contact, avec laquelle la structure de suspension est en contact dans la position de support pour supporter le dispositif de fixation (1), est disposée plus haut que l'ouverture (4) lorsque la structure de suspension supporte le dispositif de fixation (1) dans la position de support.

6. Boîtier de luminaire selon l'une des revendications précédentes, la fente (5) s'étendant de manière inclinée par rapport à l'horizontale lorsque la structure de suspension supporte le dispositif de fixation (1) dans la position de support, de telle sorte que la structure de suspension peut être entraînée dans la position de support par le poids du dispositif de fixation (1), la fente s'étendant de préférence de manière inclinée d'un angle de 5° à 15°, de manière particulièrement préférée d'un angle de 10°, par rapport à l'horizontale lorsque la structure de suspension supporte le dispositif de fixation (1) dans la position de support.

7. Boîtier de luminaire selon l'une des revendications précédentes, l'au moins une structure de fixation (2) présentant une autre ouverture (6) qui est reliée à la fente (5), en particulier à la première section partielle (51a) de la section (51) s'étendant en forme de dentelure, et qui est réalisée afin de pouvoir maintenir la structure de suspension dans la position de support, l'autre ouverture (6) présentant de préférence la zone de contact.

8. Boîtier de luminaire selon l'une des revendications précédentes, l'ouverture (4) et/ou l'autre ouverture (6) étant réalisée(s) en fonction de la structure de suspension et/ou étant de forme ronde, de préférence circulaire, ou polygonale, de préférence rectangulaire ou carrée et/ou l'ouverture (4) étant plus grande que l'autre ouverture (6), de telle sorte que la structure de suspension peut passer à travers l'ouverture (4) et ne peut pas passer à travers l'autre ouverture (6), l'ouverture (4) présentant de préférence un diamètre de 5 mm à 10 mm, de manière particulièrement préférée de 8,5 mm et/ou l'autre ouverture (6) présentant de préférence un diamètre de 2 mm à 6 mm, de manière particulièrement préférée de 4,5 mm.

9. Boîtier de luminaire selon l'une des revendications précédentes, comportant au moins deux, de préférence trois ou quatre structures de fixation (2), qui sont de préférence réparties uniformément sur le dispositif de fixation (1) et/ou sont de préférence réalisées dans des zones délimitant le dispositif de fixation (1), comme par exemple des zones de coin (3).

10. Boîtier de luminaire selon l'une des revendications précédentes, le dispositif de fixation (1) étant fabriqué en aluminium, en particulier par un procédé de moulage sous pression d'aluminium, et/ou l'au moins une structure de fixation (2) étant réalisée d'un seul tenant avec le dispositif de fixation (1).

11. Boîtier de luminaire selon l'une des revendications précédentes, le dispositif de fixation (1) étant relié d'un seul tenant ou de manière amovible au boîtier de luminaire.

12. Luminaire, en particulier luminaire suspendu, présentant un boîtier de luminaire selon l'une des revendications précédentes ainsi qu'au moins une source lumineuse, telle que par exemple une **DEL,** logée dans le boîtier de luminaire.

13. Système d'éclairage présentant un luminaire selon la revendication précédente et une structure de suspension, la structure de suspension, dans la position de support, supportant le dispositif de fixation (1) et donc le luminaire, de telle sorte que le luminaire est fixé à la structure de suspension par l'intermédiaire du dispositif de fixation (1).
